# EUROPÄISCHE PATENTANMELDUNG

(11) **EP 2 783 916 A1**
(43) Veröffentlichungstag der Anmeldung: **01.10.2014**
(21) Anmeldenummer: 13161705.2
(22) Anmeldetag: 28.03.2013
(51) Int. Cl.: B60R 1/06, B60R 1/12, B60Q 1/26

(54) **Platine, Anzeigeeinrichtung und Außenspiegel**

(71) Anmelder: SMR Patents S.à.r.l., 1653 Luxembourg (LU)
(72) Erfinder: Fritz, Daniel, 70374 Stuttgart (DE)
(74) Vertreter: Weber-Bruls, Dorothée

(57) **Zusammenfassung**

Die Erfindung betrifft eine Platine (2) für eine Anzeigeeinrichtung (4), insbesondere eines Außenspiegels eines Kraftfahrzeugs, mit mindestens einem Träger (6), mit mindestens einem Anschlussmittel (8), durch das der Träger (6) mit einer elektrischen Energiequelle verbindbar oder verbunden ist, mit mindestens einer ersten Aufnahme (10) für einen ersten elektrischen Verbraucher (24), die an einer ersten Oberfläche des Trägers (6) anordenbar oder angeordnet ist und die mit dem Anschlussmittel (8) verbindbar oder verbunden ist, gekennzeichnet durch, mindestens eine zweite Aufnahme (12) für einen zweiten elektrischen Verbraucher (28), die an einer zweiten Oberfläche des Trägers (6) anordenbar oder angeordnet ist und die mit dem Anschlussmittel (8) verbindbar oder verbunden ist.

## Beschreibung

Die Erfindung betrifft eine Platine für eine Anzeigeeinrichtung, insbesondere eines Außenspiegels eines Kraftfahrzeugs, mit mindestens einem Träger, mit mindestens einem Anschlussmittel, durch das der Träger mit einer elektrischen Energiequelle verbindbar oder verbunden ist, mit mindestens einer ersten Aufnahme für einen ersten elektrischen Verbraucher, die an einer ersten Oberfläche des Trägers anordenbar oder angeordnet ist und die mit dem Anschlussmittel verbindbar oder verbunden ist. Darüber hinaus betrifft die Erfindung eine Anzeigeeinrichtung für einen Außenspiegel eines Kraftfahrzeugs, mit mindestens einem ersten elektrischen Verbraucher, mit mindestens einem zweiten elektrischen Verbraucher und mit mindestens einer Platine, die mindestens einen Träger, die mindestens ein Anschlussmittel, durch das der Träger mit einer elektrischen Energiequelle verbindbar oder verbunden ist, und die mindestens eine erste Aufnahme für einen ersten elektrischen Verbraucher umfasst, die an einer ersten Oberfläche des Trägers anordenbar oder angeordnet ist und die mit dem Anschlussmittel verbindbar oder verbunden ist. Schließlich betrifft die Erfindung einen Außenspiegel für ein Kraftfahrzeug mit einer derartigen Anzeigeeinrichtung und/oder mit einer derartigen Platine.

Platinen für Anzeigeeinrichtungen sowie Anzeigeeinrichtungen mit Platinen finden Einsatz in Kraftfahrzeugen. Bekannte Anzeigeeinrichtungen mit Platinen umfassen beispielsweise Totwinkel-Warnanzeigen, bei denen ein Leuchtmittel im Außenspiegel bestromt wird, wenn ein sich ein Verkehrsteilnehmer im Totwinkel des Kraftfahrzeugs befindet. Solchenfalls ist die Platine hinter dem Spiegelglas angeordnet und strahlt durch einen lichtdurchlässigen Bereich im Spiegelglas in Richtung auf einen Kraftfahrzeugfahrer. Darüber hinaus sind Außenspiegel bekannt, bei denen die Anzeigeeinrichtung eine Wiederholblinkleuchte umfasst, die bei Betätigen eines Schalters bevorstehenden Richtungswechsel des Kraftfahrzeugs durch periodisches Bestromen eines Leuchtmittels anzeigt.

Bei den bekannten Außenspiegeln hat es sich als nachteilig herausgestellt, dass die Vielzahl an einzelnen Komponenten einen korrespondieren Platzbedarf benötigen.

Aufgabe der Erfindung ist, einen Außenspiegel, eine Anzeigeeinrichtung sowie eine Platine vorzuschlagen, mit der ein Außenspiegel bauteilreduziert und kompakt gestaltbar ist.

Diese Aufgabe wird bei einer eingangs genannten Platine für eine Anzeigeeinrichtung gelöst durch mindestens eine zweite Aufnahme für einen zweiten elektrischen Verbraucher, die an einer zweiten Oberfläche des Trägers anordenbar oder angeordnet ist und die mit dem Anschlussmittel verbindbar oder verbunden ist.

Dadurch, dass der Träger der Platine eine erste Oberfläche umfasst, an der ein erster elektrischer Verbraucher anordenbar ist, und eine zweite Oberfläche umfasst an der ein zweiter elektrischer Verbraucher anordenbar ist, ist die Einsetzbarkeit der Platine erweitert. Hierdurch können einer Platine an unterschiedlichen Oberflächen mehrere elektrische Verbraucher zugeordnet werden, was ein bauteilreduziertes Ausgestalten der Anzeigeeinrichtung und des Außenspiegels ermöglicht.

Ferner ist es denkbar, dass an einer dritten Oberfläche des Trägers ein dritter Verbraucher, an einer vierten Oberfläche ein vierter Verbraucher und so weiter vorgesehen ist.

Der Träger kann eine beliebige Kontur umfassen. Er kann beispielsweise plattenförmig ausgebildet sein oder in Form eines Würfels oder dergleichen.

Bei einer Ausführungsform der erfindungsgemäßen Platine erweist es sich als vorteilhaft, wenn die erste Oberfläche des Trägers und die zweite Oberfläche des Trägers aneinander angrenzen oder zueinander beabstandet sind.

Wenn die erste Oberfläche des Trägers und die zweite Oberfläche des Trägers aneinander angrenzen, erweist es sich als vorteilhaft, wenn der Träger eine räumliche Struktur, insbesondere einen Würfel, einen Quader, ein Prisma oder dergleichen umfasst. Wenn die erste Oberfläche des Trägers und die zweite Oberfläche des Trägers zueinander beabstandet sind, erweist es sich als vorteilhaft, wenn der Träger plattenförmig ausgebildet ist.

Darüber hinaus erweist es sich als vorteilhaft, wenn die erste Oberfläche des Trägers und die zweite Oberfläche des Trägers parallel zueinander verlaufen oder zueinander geneigt sind.

Um den ersten elektrischen Verbraucher und den zweiten elektrischen Verbraucher mit elektrischer Energie zu versorgen, erweist es sich als vorteilhaft, wenn mindestens eine zwischen Anschlussmittel und erster Aufnahme und/oder zweiter Aufnahme erstreckte erste elektrische leitfähig Struktur und/oder wenn mindestens eine zwischen Anschlussmittel und erster Aufnahme und/oder zweiter Aufnahme erstreckte zweite elektrische leitfähig Struktur vorgesehen ist.

Die erste elektrisch leitfähige Struktur und/oder die zweite elektrisch leitfähige Struktur können beispielsweise ein kupferhaltiges Material umfassen, das auf den Träger aufgedampft, aufgelötet, aufgeätzt und/oder aufgeklebt ist.

Darüber hinaus wird die Aufgabe durch eine eingangs genannte Anzeigeeinrichtung dadurch gelöst, dass die Platine mindestens eine zweite Aufnahme für den zweiten elektrischen Verbraucher umfasst, die an einer zweiten Oberfläche des Trägers anordenbar oder angeordnet ist und die mit dem Anschlussmittel verbindbar oder verbunden ist.

Bei dem ersten elektrischen Verbraucher und/oder bei dem zweiten elektrischen Verbraucher kann es sich um eine beliebige elektrische Komponente handeln. Bei einer Weiterbildung der erfindungsgemäßen Anzeigeeinrichtung erweist es sich als vorteilhaft, wenn der erste elektrische Verbraucher und/oder der zweite elektrische Verbraucher mindestens ein Leuchtmittel und/oder mindestens ein Sensormittel umfasst.

Grundsätzlich ist es denkbar, dass der erste elektrische Verbraucher und/oder der zweite elektrische Verbraucher aus mindestens einem Leuchtmittel oder mindestens einem Sensormittel gebildet sind. Darüber hinaus ist es denkbar, dass der erste elektrische Verbraucher sowohl mindestens ein Leuchtmittel als auch mindestens ein Sensormittel umfasst.

Das Leuchtmittel kann beispielsweise eine LED umfassen. Das Sensormittel kann beispielsweise einen Fotosensor, einen Bewegungssensor, ein Abstandssensor oder dergleichen umfassen.

Eine Ausführungsform der erfindungsgemäßen Anzeigeeinrichtung ist gekennzeichnet durch mindestens eine Steuereinheit mit der dem ersten elektrischen Verbraucher eine erste Funktion, insbesondere eine Wiederholblinkfunktion, mit der dem zweiten elektrischen Verbraucher eine zweite Funktion, insbesondere Totwinkelanzeigefunktion, und/oder mit der den ersten elektrischen Verbraucher und dem zweiten elektrischen Verbraucher die erste Funktion und/oder die zweite Funktion zuordenbar ist.

Die Steuereinheit kein ausschließlich der Anzeigeeinrichtung zugeordnet sein oder eine ohnehin im Fahrzeug vorhandene Sensoreinheit umfassen, die weitere Steuermaßnahmen umfasst.

Schließlich wird die Aufgabe gelöst durch einen Außenspiegel für ein Kraftfahrzeug mit mindestens einem Gehäuse, mit mindestens einer im oder am Gehäuse festlegbaren oder festgelegten Anzeigeeinrichtung, insbesondere mit mindestens einem der zuvor genannten Merkmale, und/oder mit mindestens einer im oder am Gehäuse festlegbaren Platine, insbesondere mit mindestens einem der zuvor genannten Merkmale.

Der Außenspiegel kann darüber hinaus eine Spiegelfläche umfassen, die das Gehäuse auf einer der Fahrtrichtung abgewandten Seite verschließt. Die Anzeigeeinrichtung und/oder die Platine können innerhalb des Gehäuses, also sowohl von Gehäuse als auch Spiegelfläche umschlossen, angeordnet sein.

Bei einer Ausführungsform des erfindungsgemäßen Außenspiegels erweist es sich als vorteilhaft, wenn der Außenspiegel mindestens einen zumindest abstandsweise transparenten Blinkerkörper umfasst, der im oder am Gehäuse angeordnet ist und in den von dem ersten elektrischen Verbraucher und/oder dem zweiten elektrischen Verbraucher ausgestrahltes Licht einkoppelbar, weiterleitbar und/oder auskoppelbar ist.

Der Blinkerkörper kann Teil einer Wiederholblinkeinrichtung sein, die mit dem ersten elektrischen Verbraucher, und/oder mit dem zweiten elektrischen Verbraucher, bei dem der durch mindestens ein Leuchtmittel gebildet ist, ist es periodisch lichtabstrahlbar ist.

In Weiterbildung letztgenannten Erfindungsgedankens erweist es sich als vorteilhaft, wenn der Blinkerkörper einen L-, oder Y-förmigen Abschnitt umfasst, der auf einer Innenseite des Gehäuses einen Hohlraum aufweist, in dem die Platine zumindest teilweise anordenbar oder angeordnet ist.

Der erfindungsgemäße Außenspiegel, die erfindungsgemäße Anzeigeeinrichtung und die erfindungsgemäße Platine erweisen sich in mehrfacher Hinsicht als vorteilhaft:
Dadurch, dass an ein und derselben Platine mehrere Verbraucher mit mehreren Funktionen anordenbar sind, ist der Außenspiegel bauteilreduziert herstellbar. Darüber hinaus ist die Einsetzbarkeit einer Platine und/oder einer Anzeigeeinrichtung erhöht.

Weitere Merkmale, Einzelheiten und Vorteile der Erfindung ergeben Sie aus den beigefügten Patentansprüchen aus der zeichnerischen Darstellung und nachfolgenden Beschreibung einer bevorzugten Ausführungsform einer erfindungsgemäßen Platine beziehungsweise Anzeigeeinrichtung.

In der Zeichnung zeigt:
- Figur 1: eine Seitenansicht einer schematischen Darstellung einer erfindungsgemäßen Platine;
- Figur 2: eine schematische Schnittansicht durch eine erfindungsgemäße Anzeigevorrichtung mit einer erfindungsgemäßen Platine.

Die Figuren zeigen eine insgesamt mit dem Bezugszeichen 2 versehene Platine für eine Anzeigevorrichtung 4, insbesondere eines Außenspiegels eines Kraftfahrzeugs. Die Platine umfasst einen Träger 6 und ein Anschlussmittel 8, durch das der Träger 6 mit einer elektrischen Energiequelle verbindbar oder verbunden ist. Darüber hinaus umfasst die Platine 2 an einer ersten Oberfläche des Trägers 6 eine erste Aufnahme 10. In die erste Aufnahme 10 ist ein erster elektrischer Verbraucher 24 anordenbar.

Darüber hinaus umfasst die Platine 2 an einer zweiten Oberfläche des Trägers 6 eine zweite Aufnahme 12, an der ein zweiter elektrischer Verbraucher 28 anordenbar ist.

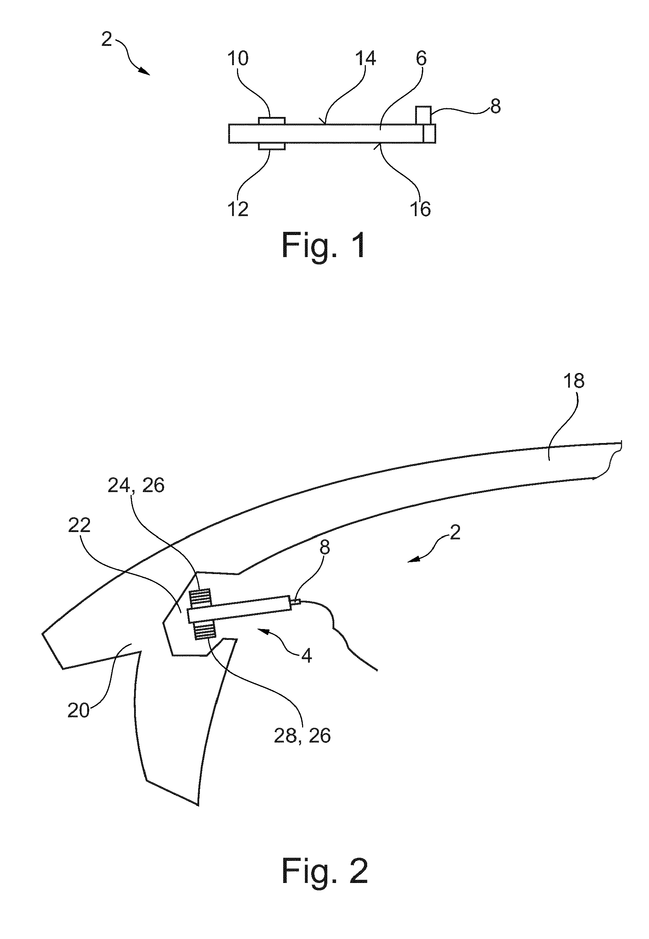

Bei dem in Figur 1 gezeigten Ausführungsbeispiel ist die erste Oberfläche und die zweite Oberfläche des Trägers 6 zueinander beabstandet und im Wesentlichen parallel. Der Träger 6 ist bei dem gezeigten Ausführungsbeispiel plattenförmig ausgebildet.

Darüber hinaus umfasst die Platine 2 eine erste elektrisch leitfähige Struktur 14, die zwischen der ersten Aufnahme 10 und dem Anschlussmittel 8 erstreckt ist sowie eine zweite elektrisch leitfähige Struktur 16, die zwischen der zweiten Aufnahme 12 und dem Anschlussmittel 8 erstreckt ist.

Figur 2 zeigt eine schematische Schnittansicht durch einen teilweise dargestellten Außenspiegel des Kraftfahrzeugs. Bei diesem ist lediglich ein transparenter Blinkerkörper 18 dargestellt der im beziehungsweise an einem Gehäuse des Außenspiegels anordenbar ist. der Blinkerkörper 18 umfasst einen y-förmigen Abschnitt 20, der auf der Innenseite des Gehäuses einen Hohlraum 22 bildet. In diesem Hohlraum 22 ist die erfindungsgemäße Platine 2 beziehungsweise Anzeigeeinrichtung 4 angeordnet.

Im in Figur 2 ersichtlichen Ausführungsbeispiel umfasst ein erster elektrischer Verbraucher 24 ein als LED ausgebildetes Leuchtmittel 26 und ein zweiter elektrischer Verbraucher 28 ebenfalls ein als LED ausgebildetes Leuchtmittel 26.

Die in der vorstehenden Beschreibung, in den Ansprüchen, sowie in den Zeichnungen gezeigten Merkmale der Erfindung können sowohl einzeln, als auch in jeder beliebigen Kombination in der Verwirklichung der Erfindung und ihren verschiedenen Ausführungsformen wesentlich sein.

### Bezugszeichenliste

| | |
|---|---|
| 2 | Platine |
| 4 | Anzeigeeinrichtung |
| 6 | Träger |
| 8 | Anschlussmittel |
| 10 | erste Aufnahme |
| 12 | zweite Aufnahme |
| 14 | erste elektrisch leitfähige Struktur |
| 16 | zweite elektrisch leitfähige Struktur |
| 18 | Blinkerkörper |
| 20 | Y-förmiger Abschnitt |
| 22 | Hohlraum |
| 24 | erster elektrischer Verbraucher |
| 26 | Leuchtmittel |
| 28 | zweiter elektrischer Verbraucher |

## Patentansprüche

1. Platine (2) für eine Anzeigeeinrichtung (4), insbesondere eines Außenspiegels eines Kraftfahrzeugs, mit mindestens einem Träger (6), mit mindestens einem Anschlussmittel (8), durch das der Träger (6) mit einer elektrischen Energiequelle verbindbar oder verbunden ist, mit mindestens einer ersten Aufnahme (10) für einen ersten elektrischen Verbraucher (24), die an einer ersten Oberfläche des Trägers (6) anordenbar oder angeordnet ist und die mit dem Anschlussmittel (8) verbindbar oder verbunden ist, **gekennzeichnet durch,** mindestens eine zweite Aufnahme (12) für einen zweiten elektrischen Verbraucher (28), die an einer zweiten Oberfläche des Trägers (6) anordenbar oder angeordnet ist und die mit dem Anschlussmittel (8) verbindbar oder verbunden ist.

2. Platine (2) nach Anspruch 1, **dadurch gekennzeichnet, dass** die erste Oberfläche des Trägers (6) und die zweite Oberfläche des Trägers (6) aneinander angrenzen oder zueinander beabstandet sind.

3. Platine (2) nach Anspruch 1 oder 2, **dadurch gekennzeichnet, dass** die erste Oberfläche des Trägers (6) und die zweite Oberfläche des Trägers (6) parallel zueinander verlaufen oder zueinander geneigt sind.

4. Platine (2) nach mindestens einem der vorhergehenden Ansprüche, **gekennzeichnet durch** mindestens eine zwischen Anschlussmittel (8) und erster Aufnahme (10) und/oder zweiter Aufnahme (12) erstreckte erste elektrische leitfähig Struktur (14) und/oder **durch** mindestens eine zwischen Anschlussmittel (8) und erster Aufnahme (10) und/oder zweiter Aufnahme (12) erstreckte zweite elektrische leitfähig Struktur (16).

5. Anzeigeeinrichtung (4) für einen Außenspiegel eines Kraftfahrzeugs, mit mindestens einem ersten elektrischen Verbraucher (24), mit mindestens einem zweiten elektrischen Verbraucher (28) und mit mindestens einer Platine (2), insbesondere nach einem der Ansprüche 1 bis 4, die mindestens einen Träger (6), die mindestens ein Anschlussmittel (8), durch das der Träger (6) mit einer elektrischen Energiequelle verbindbar oder verbunden ist, und die mindestens eine erste Aufnahme (10) für einen ersten elektrischen Verbraucher (24) umfasst, die an einer ersten Oberfläche des Trägers (6) anordenbar oder angeordnet ist und die mit dem Anschlussmittel (8) verbindbar oder verbunden ist, **dadurch gekennzeichnet, dass** die Platine (2) mindestens eine zweite Aufnahme (12) für den zweiten elektrischen Verbraucher (28) umfasst, die an einer zweiten Oberfläche des Trägers (6) anordenbar oder angeordnet ist und die mit dem Anschlussmittel (8) verbindbar oder verbunden ist.

6. Anzeigeeinrichtung (4) nach Anspruch 5, **dadurch gekennzeichnet, dass** der erste elektrische Verbraucher (24) und/oder der zweite elektrische Verbraucher (28) mindestens ein Leuchtmittel (26) und/oder mindestens ein Sensormittel umfasst.

7. Anzeigeeinrichtung (4) nach Anspruch 5 oder 6, **gekennzeichnet durch** mindestens eine Steuereinheit mit der dem ersten elektrischen Verbraucher (24) eine erste Funktion, insbesondere eine Wiederholblinkfunktion, mit der dem zweiten elektrischen Verbraucher (28) eine zweite Funktion, insbesondere Totwinkelanzeigefunktion, und/oder mit der den ersten elektrischen Verbraucher (24) und dem zweiten elektrischen Verbraucher (28) die erste Funktion und/oder die zweite Funktion zuordenbar ist.

8. Außenspiegel für ein Kraftfahrzeug mit mindestens einem Gehäuse, mit mindestens einer im oder am Gehäuse festlegbaren oder festgelegten Anzeigeeinrichtung (4), insbesondere nach einem der Ansprüche 5 bis 7, und/oder mit mindestens einer im oder am Gehäuse festlegbaren Platine (2), insbesondere nach einem der Ansprüche 1 bis 4.

9. Außenspiegel nach Anspruch 8, mit mindestens einem zumindest abschnittsweise transparenten Blinkerkörper (18), der im oder am Gehäuse angeordnet ist und in den von dem ersten elektrischen Verbraucher (24) und/oder dem zweiten elektrischen Verbraucher (28) ausgestrahltes Licht einkoppelbar, weiterleitbar und/oder auskoppelbar ist.

10. Außenspiegel nach Anspruch 9, **dadurch gekennzeichnet, dass** der Blinkerkörper (18) einen L-, oder Y-förmigen Abschnitt (20) umfasst, der auf einer Innenseite des Gehäuses einen Hohlraum (22) aufweist, in dem die Platine (2) zumindest teilweise anordenbar oder angeordnet ist.
